# EUROPÄISCHE PATENTSCHRIFT

(11) **EP 2 639 471 B1**
(45) Veröffentlichungstag und Bekanntmachung des Hinweises auf die Patenterteilung: **02.10.2019**
(21) Anmeldenummer: 13155569.0
(22) Anmeldetag: 18.02.2013
(51) Int. Cl.: F16D 23/14, F16D 13/75

(54) **Kupplungsaktuator und Verfahren zum Einbauen eines Kupplungsaktuators**
Clutch actuator and method for installing a clutch actuator
Actionneur de couplage et procédé de montage d'un actionneur de couplage

(30) Priorität: 14.03.2012 DE 102012203953
(43) Veröffentlichungstag der Anmeldung: 18.09.2013
(73) Patentinhaber: ZF Friedrichshafen AG, 88046 Friedrichshafen (DE)
(72) Erfinder: Fenn, Peter, 97534 Waigolshausen (DE); Vikuk, Johann, 97422 Schweinfurt (DE); Buhl, Jörg, 97453 Schonungen (DE)

(56) Entgegenhaltungen:
- EP-A1- 0 279 270
- EP-A1- 0 280 072
- WO-A1-2005/008094
- DE-A1- 3 113 463
- DE-A1- 4 431 641

## Beschreibung

Ausführungsbeispiele beziehen sich auf einen Kupplungsaktuator für eine Kupplung, beispielsweise eine Kupplung für ein Fahrzeug, und ein Verfahren zum Einbauen eines Kupplungsaktuators.

Kupplungen werden in einer Vielzahl von Anwendungen des Maschinen-, Anlagen- und Fahrzeugbaus eingesetzt, bei denen eine trennbare bzw. verbindbare Übertragung eines Drehmoments relevant ist. So werden Kupplungen beispielsweise im Bereich des Fahrzeugbaus und des Kraftfahrzeugbaus zur trennbaren Kopplung einer Antriebseinheit, also beispielsweise eines Verbrennungsmotors oder eines Elektromotors, an ein Getriebe oder eine andere Komponente eines Antriebsstrangs (z. B. eine weitere Antriebseinheit) eines Fahrzeugs verwendet. Viele dieser Kupplungen basieren auf der Schaffung einer reibschlüssigen Verbindung, obwohl natürlich auch andere Verbindungstechniken eingesetzt werden können.

Ein Beispiel stellen so im Fahrzeug-, insbesondere im Kraftfahrzeugbereich, Anfahr- oder Trennkupplungen dar, welche zwischen dem Antriebsaggregat, beispielsweise einem Verbrennungsmotor, und dem nachgeschalteten Getriebe angeordnet sind. Bei diesen wird häufig eine Trennung der Kupplung über eine Betätigung eines Ausrückers oder einer vergleichbaren Strukturen erzielt. Ebenso kann durch Betätigung einer entsprechenden Struktur auch auf eine Betätigung hin die reibschlüssige Verbindung innerhalb der Kupplung geschaffen werden.

Aufgrund der Verwendung von reibschlüssigen Verbindungen innerhalb der Kupplung kann es beispielsweise aufgrund von Schlupf an den betreffenden Reibflächen zu einem Verschleiß kommen, weshalb es ratsam sein kann, verschleißausgleichende bzw. spielausgleichende Elemente zu implementieren, um ein möglichst gleichmäßiges Ansprechen der Kupplung über die Lebensdauer hinweg zu ermöglichen.

Die Ansteuerung der Kupplung kann hierbei typischerweise über einen Kupplungsaktuator erfolgen. Im Falle automatisierter Kupplungs- oder Automatiksysteme wird eine entsprechende Betätigung ergänzend oder ausschließlich durch ein Steuergerät vorgenommen.

Bei der Montage des Kupplungsaktuators wird dieser konventionell mithilfe von Langlöchern an dem Getriebegehäuse oder einer anderen Komponente montiert. Durch die Langlöcher besteht die Möglichkeit, den Kupplungsaktuator so hinsichtlich seiner Lage zu verschieben, dass das verschleißausgleichende Bauelement hinsichtlich seiner Funktionsweise während des Einbaus veränderbar bzw. einstellbar ist.

Dies bedeutet jedoch, dass der Kupplungsaktuator erst im Zusammenspiel mit dem Getriebe bzw. der Kupplung während des Einbaus angepasst werden kann. Dieser Vorgang kann jedoch für den Hersteller des Getriebes bzw. den Hersteller des betreffenden Fahrzeugs zeitaufwendig und gegebenenfalls fehleranfällig sein, da jeder einzelne Kupplungsaktuator während des Einbaus zusätzlich hinsichtlich seiner Lage justiert werden muss.

WO 2005/008094 A1 offenbart einen Kupplungsteller zur Betätigung einer Kupplung. Dieser umfasst einen Verschleißausgleichsmechanismus mit einer Zahnscheibe. Die Zahnscheibe ist gegen ungewollte Bewegung verriegelbar.

EP 0 279 270 A1 betrifft gezogene Reibungskupplung. Der Druckring zur Verbindung der Tellerfeder mit dem Ausrücker besitzt Halteklammern.

DE 31 13 463 A1 offenbart eine Reibungskupplung die aus zwei Baueinheiten besteht. Je eine der Baueinheiten wird am Motor bzw. am Getriebe befestigt, bevor diese miteinander verbunden werden. Danach werden die Bauteile mit einer Verriegelungsverbindung aneinander befestigt.

Aus DE 44 31 641 A1 geht eine Ausrückvorrichtung hervor. Bei dieser ist eine Kompensationsfeder verriegelt.

Aber auch bei anderen Anwendungen im Gebiet des Anlagen-, Maschinen- und Fahrzeugbaus treten ähnliche Herausforderungen auf.

Es besteht daher ein Bedarf, eine Montage eines Kupplungsaktuators zu vereinfachen.

Diesem Bedarf trägt ein Kupplungsaktuator gemäß Patentanspruch 1 und ein Verfahren zum Einbauen eines Kupplungsaktuators gemäß Patentanspruch 10 Rechnung.

Ein Kupplungsaktuator für eine Kupplung, beispielsweise eine Kupplung für ein Fahrzeug, gemäß einem Ausführungsbeispiel umfasst ein Kraftübertragungselement, das ausgebildet ist, um durch eine Bewegung entlang einer Bewegungsrichtung eine Kraft auf ein Betätigungselement der Kupplung auszuüben, um ein wenigstens teilweises Schließen oder Öffnen der Kupplung zu bewirken. Der Kupplungsaktuator umfasst ferner eine Einrichtung zum Verriegeln des Kraftübertragungselements, die ausgebildet ist, um von einer Verriegelungsposition in eine Freigabeposition überführbar zu sein, wobei die Einrichtung derart ausgebildet ist, dass sie in der Verriegelungsposition eine Bewegung des Kraftübertragungselements entlang der Bewegungsrichtung beschränkt und in der Freigabeposition die Bewegung des Kraftübertragungselements entlang der Bewegungsrichtung freigibt.

Einem Ausführungsbeispiel eines Kupplungsaktuators für eine Kupplung gemäß einem Ausführungsbeispiel liegt so die Erkenntnis zugrunde, dass eine Vereinfachung der Montage eines Kupplungsaktuators dadurch erzielbar ist, dass dieser die Einrichtung zum Verriegeln des Kraftübertragungselements aufweist, sodass das Kraftübertragungselement in eine vordefinierte oder auch eindeutig festgelegte Position in der Verriegelungsposition bringbar ist. Hierdurch kann gegebenenfalls eine Justierung des Kupplungsaktuators im Rahmen der Montage desselben entfallen.

Das Kraftübertragungselement kann hierbei beispielsweise ein verschleißausgleichendes Kraftübertragungselement sein, welches ein Vorlastfederelement umfasst, mit dessen Hilfe der Verschleißausgleich zumindest teilweise realisiert wird. So kann es sich beispielsweise bei dem Kraftübertragungselement um einen verschleißausgleichenden Stößel mit einer integrierten Vorlastfeder handeln. Es können jedoch bei anderen Ausführungsbeispielen auch andere Kraftübertragungselemente zum Einsatz kommen.

Bei einem Kupplungsaktuator gemäß einem Ausführungsbeispiel kann die Einrichtung zum Verriegeln des Kraftübertragungselements derart ausgebildet sein, dass die Einrichtung in einem montierten Zustand von außerhalb eines Gehäuses des Kupplungsaktuators von der Verriegelungsposition in die Freigabeposition überführbar ist. Hierdurch kann es möglich sein, den Kupplungsaktuator an einem entsprechenden anderen Bauteil, beispielsweise einem Gehäuse eines Getriebes, zu montieren und anschließend ohne ein Öffnen des Gehäuses des Kupplungsaktuators diesen von der Verriegelungsposition in die Freigabeposition zu überführen. Hierdurch kann also die Montage des Kupplungsaktuators weiter vereinfacht werden.

Bei einem Kupplungsaktuator gemäß einem Ausführungsbeispiel kann die Einrichtung zum Verriegeln des Kraftübertragungselements ferner ausgebildet sein, um von der Freigabeposition in die Verriegelungsposition überführbar zu sein. Es kann also bei einem solchen Ausführungsbeispiel möglich sein, nicht nur die Einrichtung zum Verriegeln des Kraftübertragungselements zu entriegeln, sondern diese gegebenenfalls auch wieder zu verriegeln, um beispielsweise im Rahmen einer Wartung oder einer anderen Reparatur den Kupplungsaktuator erneut verwenden zu können. Hierbei kann der Kupplungsaktuator optional auch derart ausgebildet sein, dass das Überführen von der der Freigabeposition in die Verriegelungsposition von außerhalb eines Gehäuses des Kupplungsaktuators möglich ist. Hierdurch kann gegebenenfalls ein Öffnen des Gehäuses des Kupplungsaktuators im Rahmen einer Wartung oder einer Reparatur vermieden werden.

Bei einem Kupplungsaktuator gemäß einem Ausführungsbeispiel kann die Einrichtung zum Verriegeln des Kraftübertragungselements ein Federelement umfassen, das ausgebildet und angeordnet ist, um eine Kraft derart zu bewirken, dass die Einrichtung in der Freigabeposition verharrt, wenn die Einrichtung in diese überführt ist. Hierdurch kann es möglich sein, durch den Einsatz des Federelements eine Wahrscheinlichkeit eines unbeabsichtigten Wechselns von der Freigabeposition in die Verriegelungsposition zu unterbinden. Es kann so gegebenenfalls eine Betriebssicherheit des Kupplungsaktuators verbessert werden. Darüber hinaus kann ergänzend oder alternativ der Einsatz des Federelements auch eine leichtere Rücküberführung von der Freigabeposition in die Verriegelungsposition ermöglichen, wenn beispielsweise der Kupplungsaktuator im Rahmen einer Wartung oder im Rahmen einer Reparatur erneut montiert werden soll.

Bei einem Kupplungsaktuator gemäß einem Ausführungsbeispiel kann die Einrichtung zum Verriegeln des Kraftübertragungselements ein Verriegelungsbauteil umfassen, das derart ausgebildet ist, um durch eine Bewegung entlang eines ersten Bewegungsfreiheitsgrads die Bewegung des Kraftübertragungselements freizugeben, wobei die Einrichtung ferner derart ausgebildet sein kann, sodass ein Benutzer die Überführung der Einrichtung von der Verriegelungsposition in die Freigabeposition durch ein Bewegen des Verriegelungsbauteils entlang eines von dem ersten Bewegungsfreiheitsgrad verschiedenen zweiten Bewegungsfreiheitsgrads bewirken kann. Das Verriegelungsbauteil kann also bei einem Überführen der Einrichtung von der Verriegelungsposition in die Freigabeposition entlang des zweiten Bewegungsfreiheitsgrads bewegt werden, während die eigentliche Freigabe durch die Bewegung des Verriegelungsbauteils entlang des ersten Bewegungsfreiheitsgrads erfolgt. Die beiden Bewegungsfreiheitsgrade sind verschieden, schließen also miteinander einen von 0° verschiedenen Winkel ein, sodass eine gegebenenfalls auf das Verriegelungsbauteil entlang des ersten Bewegungsfreiheitsgrads einwirkende Kraft nur mittelbar und/oder nur teilweise von dem Benutzer bei der Überführung überwunden werden muss. Die Bewegungsfreiheitsgrade können hierbei unabhängig voneinander translatorische oder rotatorische Bewegungsfreiheitsgrade sein. Es kann sich also bei dem ersten und/oder dem zweiten Bewegungsfreiheitsgrad um eine lineare Bewegung oder eine Drehbewegung handeln.

Bei einem solchen Kupplungsaktuator gemäß einem Ausführungsbeispiel kann das Verriegelungsbauteil derart ausgebildet sein, dass der Benutzer das Überführen von der Verriegelungsposition in die Freigabeposition durch ein Bewegen des Verriegelungsbauteils ausschließlich entlang des zweiten Bewegungsfreiheitsgrads bewirken kann. Ergänzend oder alternativ kann die Einrichtung derart ausgebildet sein, dass der erste und der zweite Bewegungsfreiheitsgrad im Wesentlichen lokal stets senkrecht aufeinander stehen. Hierdurch kann eine gegenseitige Beeinflussung durch entlang der beiden Bewegungsfreiheitsgrade ausgeübter bzw. auf das Verriegelungsbauteil einwirkender Kräfte gegebenenfalls weiter reduziert und somit eine Montage bzw. Bedienung des Kupplungsaktuators weiter vereinfacht werden.

Bei einem Kupplungsaktuator gemäß einem Ausführungsbeispiel kann die Einrichtung zum Verriegeln des Kraftübertragungselements ein Verriegelungsbauteil umfassen, das einen Anschlag aufweist, der derart ausgebildet und angeordnet ist, dass dieser in der Verriegelungsposition mit dem Kraftübertragungselement mechanisch mittelbar oder unmittelbar in Kontakt steht, um die Bewegung des Kraftübertragungselements entlang der Bewegungsrichtung zu beschränken. So kann beispielsweise mit einer mechanisch einfach herzustellenden und stabilen Konstruktion ein entsprechender Kupplungsaktuator umgesetzt werden.

Bei einem solchen Kupplungsaktuator gemäß kann der Anschlag mit einem Gegenanschlag der Einrichtung in der Verriegelungsposition derart in Kontakt stehen, dass die Bewegung des Kraftübertragungselements entlang der Bewegungsrichtung hierdurch über eine durch die Anlage des weiteren Anschlags an dem Gegenanschlag unterbunden wird. Alternativ oder ergänzend kann bei einem Kupplungsaktuator das Verriegelungsbauteil einen weiteren Anschlag aufweisen, der mit dem Gegenanschlag der Einrichtung in der Verriegelungsposition derart in Kontakt steht, dass die Bewegung des Kraftübertragungselements entlang der Bewegungsrichtung hierdurch über eine durch die Anlage des weiteren Anschlags an dem Gegenanschlag unterbunden wird. Hierdurch kann gegebenenfalls eine robuste und klar definiertere Position des Kraftübertragungselements in der Verriegelungsposition festgelegt werden, die beispielsweise weniger stark von Parameterstreuungen einzelner Komponenten abhängen.

Bei einem Kupplungsaktuator gemäß einem Ausführungsbeispiel kann ein Gehäuse des Kupplungsaktuators Verbindungsstrukturen aufweisen, die derart ausgebildet sind, sodass diese eine eindeutige Montageposition festlegen. Hierdurch kann nicht nur die Montage des Kupplungsaktuators gegebenenfalls vereinfacht werden, es kann gegebenenfalls auch eine mechanisch stabilere Einbaulage bzw. Montageposition realisiert werden, da die Verbindungsstrukturen nunmehr lediglich eine eindeutige Montageposition definieren, nicht jedoch eine Verschiebung ermöglichen müssen.

Ein Verfahren zum Einbauen eines Kupplungsaktuators gemäß einem Ausführungsbeispiel umfasst ein Bereitstellen des Kupplungsaktuators derart, dass die Einrichtung zum Verriegeln des Kraftübertragungselements in der Verriegelungsposition ist und die Bewegung des Kraftübertragungselements durch die Einrichtung beschränkt ist, sowie ein Montieren des Kupplungsaktuators und ein Überführen des Kupplungsaktuators in die Freigabeposition.

Bei einem Ausführungsbeispiel eines solchen Verfahrens können die zuvor genannten Verfahrensschritte in der angegebenen, jedoch auch gegebenenfalls in einer abweichenden Reihenfolge durchgeführt werden. So können gegebenenfalls einzelne Verfahrensschritte simultan, zumindest jedoch auch zeitlich überlappend erfolgen, sofern sich aus deren Beschreibung oder dem technischen Zusammenhang nichts anderes ergibt.

Hierbei kommt eine kraftschlüssige oder reibschlüssige Verbindung durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit insbesondere eine Normalkraftkomponente zwischen den beiden Verbindungspartnern voraus. Hierbei wird unter einer einstückig ausgebildeten Komponente eine solche verstanden, die genau aus einem zusammenhängenden Materialstück gefertigt ist. Der Begriff "einstückig" kann daher synonym mit den Begriffen "integral" oder "einteilig" verwendet werden.

Nachfolgend werden unter Bezugnahme auf die beigefügten Figuren Ausführungsbeispiele näher beschrieben und erläutert.
Fig. 1 zeigt eine perspektivische Explosionsdarstellung eines Kupplungsaktuators gemäß einem Ausführungsbeispiel;
Fig. 2 zeigt eine Detaildarstellung des Kupplungsaktuators aus Fig. 1, bei der die Einrichtung zum Verriegeln des Kraftübertragungselements in der Verriegelungsposition ist;
Fig. 3 zeigt eine weitere Detaildarstellung des Kupplungsaktuators aus Fig. 1, die sich von der in Fig. 2 gezeigten Darstellung dadurch unterscheidet, dass das Verriegelungsbauteil nicht gezeigt ist;
Fig. 4 zeigt eine perspektivische Darstellung des Kupplungsaktuators gemäß einem Ausführungsbeispiel, dessen Einrichtung zum Verriegeln des Kraftübertragungselements in der Verriegelungsposition ist;
Fig. 5 zeigt eine Fig. 4 vergleichbare perspektivische Darstellung des Kupplungsaktuators aus Fig. 1, dessen Einrichtung zum Verriegeln des Kraftübertragungselements in der Freigabeposition ist;
Fig. 6 zeigt eine Fig. 2 ähnliche Darstellung des Kupplungsaktuators aus Fig. 1, bei der die Einrichtung zum Verriegeln des Kraftübertragungselements in der Freigabeposition ist;
Fig. 7 zeigt eine Detaildarstellung des Kupplungsaktuators aus Fig. 1, bei der die Einrichtung zum Verriegeln des Kraftübertragungselements in der Freigabeposition ist und aus einer um 180° gegenüber Fig. 5 gedrehten Perspektive gezeigt ist; und
Fig. 8 zeigt ein Flussdiagramm eines Verfahrens zum Einbauen eines Kupplungsaktuators gemäß einem Ausführungsbeispiel.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

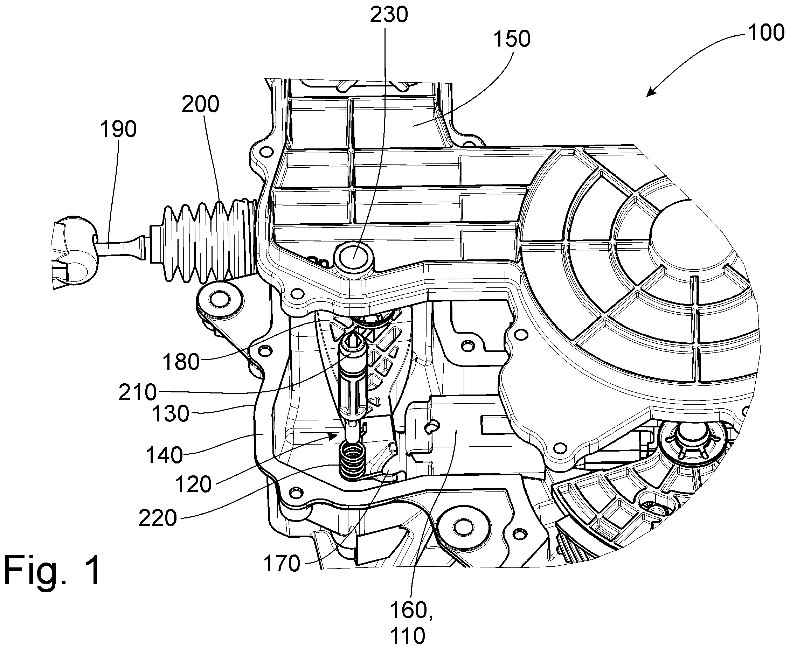

Fig. 1 zeigt eine perspektivische Explosionsdarstellung eines Kupplungsaktuators 100 gemäß einem Ausführungsbeispiel. Der Kupplungsaktuator 100 weist ein Kraftübertragungselement 110 sowie eine Einrichtung 120 zum Verriegeln des Kraftübertragungselements 110 auf. Das Kraftübertragungselement 110 und die Einrichtung 120 sind hierbei im Wesentlichen in einem Gehäuse 130 angeordnet, von dem in Fig. 1 eine Gehäuseschale 140 und ein Gehäusedeckel 150 gezeigt sind. Der Gehäusedeckel 150 ist hierbei auf die Gehäuseschale 140 aufsetzbar, sodass ein im Wesentlichen geschlossenes Gehäuse 130 gebildet wird, in dem der Kupplungsaktuator 100 im Wesentlichen angeordnet ist. Wie die nachfolgende Beschreibung zeigen wird, können einzelne Komponenten jedoch gegebenenfalls über das Gehäuse 130 hinaus- oder aus diesem hervorragen.

Der Kupplungsaktuator 100 dient hierbei der Ansteuerung eines Betätigungselements einer Kupplung, beispielsweise einer Kupplung für ein Fahrzeug oder ein Kraftfahrzeug, also beispielsweise für einen Personenkraftwagen oder einen Lastkraftwagen. Das Betätigungselement kann hierbei - je nach Typ der implementierten Kupplung - als Normal-Geschlossen-Kupplung, jedoch auch als Normal-Offen-Kupplung vorgesehen sein. Im Falle einer Normal-Geschlossen-Kupplung, bei der also ohne eine Betätigung derselben eine Drehmomentübertragung über die Kupplung hinweg möglich ist, wird das entsprechende Betätigungselement häufig auch als Ausrücker bezeichnet, da über den in Fig. 1 nicht gezeigten Ausrücker die häufig auf Basis eines Reibschlusses arbeitenden Reibflächen voneinander ausrückbar sind, um so den Kraftfluss bzw. den Drehmomentfluss über die Kupplung zu unterbrechen. Selbstverständlich können Ausführungsbeispiele eines Kupplungsaktuators 100 jedoch auch im Zusammenhang mit einer Normal-Offen-Kupplung zum Einsatz kommen. Lediglich der Einfachheit halber werden so im Folgenden lediglich Kupplungsaktuatoren 100 beschrieben, die im Zusammenhang mit einer Normal-Geschlossen-Kupplung zum Einsatz kommen.

Bei dem Kupplungsaktuator 100, wie er in Fig. 1 dargestellt ist, ist das Kraftübertragungselement 110 als verschleißausgleichender Stößel 160 implementiert, der eine in Fig. 1 nicht dargestellte und erkennbare Vorlastfeder umfasst. Die Vorlastfeder sorgt hierbei für eine Nachführung des Stößels 160, wenn aufgrund der Abnutzung oder des Verschleißes der Reibflächen der entsprechenden Kupplung die Dicke der Reibbeläge abnimmt und es daher zu einer Verlagerung der Reibflächen gegenüber einem Ausgangszustand kommt. So kann es sich bei dem Kraftübertragungselement 110 beispielsweise um ein hydraulisch betätigtes Kraftübertragungselement, jedoch auch um ein pneumatisch, elektrisch oder mechanisch betätigtes Kraftübertragungselement 110 handeln.

Über ein Kugelgelenk 170 steht hierbei das Kraftübertragungselement 110 mit einem Ausrückhebel 180 in Verbindung, der in dem Gehäuse 130 drehbar gelagert ist. Der Ausrückhebel 180 ist über eine in Fig. 1 nicht als solche erkennbare Lagerung drehbar in dem Gehäuse 130 gelagert. Er ist mit einem weiteren Bauteil 190 verbunden, welches beispielsweise bereits als Teil der Ausrückgabel oder eines anderen Ausrückmechanismus ausgeführt sein kann.

Das Gehäuse 130 umfasst hierbei eine Dichtung 200, beispielsweise eine Faltenbalg- oder Membrandichtung, über die das Gehäuse 130 gegenüber einer Bewegung des weiteren Bauteils 190 gegen ein Eindringen von Verunreinigungen, gegebenenfalls auch gegen ein Austreten von Medien aus dem Inneren des Gehäuses 130 abgedichtet ist.

Wie die nachfolgende Erörterung der Einrichtung 120 im Detail noch näher zeigen wird, umfasst die Einrichtung 120 ein Verriegelungsbauteil 210, welches auch als Stift, Vorlaststift oder Pre-Load-Pin bezeichnet wird. Die Einrichtung 120 umfasst ferner ein Federelement 220 sowie eine Öffnung 230 in dem Gehäusedeckel 150, durch die das Verriegelungsbauteil 210 wenigstens teilweise hindurch ragen kann.

Wie bereits zuvor kurz erläutert wurde, umfasst der Kupplungsaktuator 100 das Kraftübertragungselement 110, welches ausgebildet ist, um durch eine Bewegung entlang einer Bewegungsrichtung eine Kraft mittelbar auf ein Betätigungselement der Kupplung auszuüben, welches in Fig. 1 nicht dargestellt ist. Die Übertragung der Kraft erfolgt hierbei mittels des Ausrückhebels 180 sowie des weiteren Bauteils 190 und gegebenenfalls einer Ausrückgabel, die jedoch ebenso in Fig. 1 nicht gezeigt ist. Hierdurch kann das Kraftübertragungselement eine solche Kraft auf die Kupplung bzw. ihr Betätigungselement ausüben, sodass hierdurch ein Schließen oder auch ein Öffnen der Kupplung vollständig, zumindest jedoch teilweise bewirkt werden kann.

Die Einrichtung 120 zum Verriegeln des Kraftübertragungselements 110 ist hierbei ausgebildet, um von einer Verriegelungsposition in eine Freigabeposition überführbar zu sein. Die Verriegelungsposition beschränkt hierbei eine Bewegung des Kraftübertragungselements 110 entlang der zuvor genannten Bewegungsrichtung, während in der Freigabeposition die Bewegung des Kraftübertragungselements 110 entlang der Bewegungsrichtung durch die Einrichtung freigegeben wird. Eine Bewegung des Kraftübertragungselements kann daher in der Freigabeposition der Einrichtung 120 entsprechend ihrer Spezifikation erfolgen.

Die Öffnung 230 dient, wie die nachfolgende genauere Beschreibung noch zeigen wird, hierbei dem Zweck, das Verriegelungsbauteil 210 der Einrichtung 120 auch in einem montierten Zustand von außerhalb des Gehäuses 130 des Kupplungsaktuators 100 von der Verriegelungsposition in die Freigabeposition überführbar zu machen. So kann durch ein Drücken des Verriegelungsbauteils 210 durch die Öffnung 230 in den Gehäusedeckel 150 auf die Gehäuseschale 140 zu, die Einrichtung 120 in die Freigabeposition überführt werden.

Durch den Einsatz eines Kupplungsaktuators 100 gemäß einem Ausführungsbeispiel kann hierbei ein zeitaufwendiges und häufig ungenaues Einstellen der Vorlast der in Fig. 1 nicht gezeigten Vorlastfeder des Kraftübertragungselements 110 gegebenenfalls entfallen. So kann hierdurch beispielsweise eine Abstimmung der Vorlastfeder, des Ausrückers, sowie der Membran- oder Tellerfeder der Kupplung im Zusammenspiel mit der entsprechenden Druckplatte der Kupplung gegebenenfalls entfallen. Hierdurch kann es gegebenenfalls möglich sein, eine Montage des Kupplungsaktuators 100 im Vergleich zu einem konventionellen Kupplungsaktuator zu vereinfachen.

So werden bei konventionellen Kupplungsaktuatoren diese typischerweise mithilfe von Langlöchern an dem Getriebegehäuse befestigt. Durch diese Langlöcher besteht die Möglichkeit, den konventionellen Kupplungsaktuator so hinsichtlich seiner Lage zu verschieben, dass die Druckfeder, die sich im Inneren des verschleißausgleichenden Stößels befindet, komprimiert wird, sodass die nötige Vorlast auf den Ausrücker während des Betriebs erzeugt wird. Als Konsequenz wird häufig bei einem solchen System die Vorlast für die Kupplung erst im Rahmen der Montage des Kupplungsaktuators durch Feinjustieren der Position desselben bezogen auf das Getriebegehäuse eingestellt. Dieser Vorgang ist für den Hersteller des Getriebes bzw. des Kraftfahrzeugs typischerweise zeitaufwendig und häufig auch nicht optimal, da gegebenenfalls bei einer Einstellung im Rahmen des Montageverfahrens mit einer größeren Streuung der erzielten Vorlasten zu rechnen ist. Hierdurch können gegebenenfalls weitere Komponenten, beispielsweise das Ausrückerlager, stärker belastet werden, als dies für die eigentliche Funktionsfähigkeit notwendig wäre. Entsprechend kann es bei einer solchen konventionellen Lösung ratsam sein, die einzelnen Komponenten derart auszulegen, dass auch bei einer entsprechenden extremen Belastung ein Ausfall der betreffenden Einheit mit einer hinreichenden Wahrscheinlichkeit verhindert wird.

Bei dem Kupplungsaktuator 100 gemäß einem Ausführungsbeispiel, wie er beispielsweise in Fig. 1 gezeigt ist, wird eine entsprechende Einstellung dadurch umgangen, also eine Verbesserung bzw. Vereinfachung der Montage des Kupplungsaktuators 100 erzielt, indem ein federbelasteter Mechanismus, der sich im Inneren des Kupplungsaktuators 100 bzw. seines Gehäuses 130 befindet, verwendet wird. Die für die Betätigung nötige Vorlast der in Fig. 1 nicht gezeigten Vorlastfeder des Kraftübertragungselements 110 kann hierbei bei der abschließenden Prüfung (End-Of-Line-Prüfung) am Ende der Montage des Kupplungsaktuators 100 eingestellt werden. Zu diesem Zweck wird die Einrichtung 120 verriegelt, also in die Verriegelungsposition verbracht. Durch das Verriegeln wird das Kraftübertragungselement 110 (verschleißausgleichender Stößel 160) zusammengeschoben. Hierdurch wird die Vorlastfeder im Inneren des Kraftübertragungselements 110 so komprimiert, dass sich eine geforderte oder spezifizierte Vorlast einstellt oder durch eine entsprechende weitere Justage einstellbar ist. Dadurch, dass einem Kupplungsaktuator 100 gemäß einem Ausführungsbeispiel die Verriegelungsposition beibehalten werden kann, bleibt das Kraftübertragungselement in der richtigen bzw. für den späteren Einbau notwendigen Position stehen und behält so die notwendige Vorlast bei.

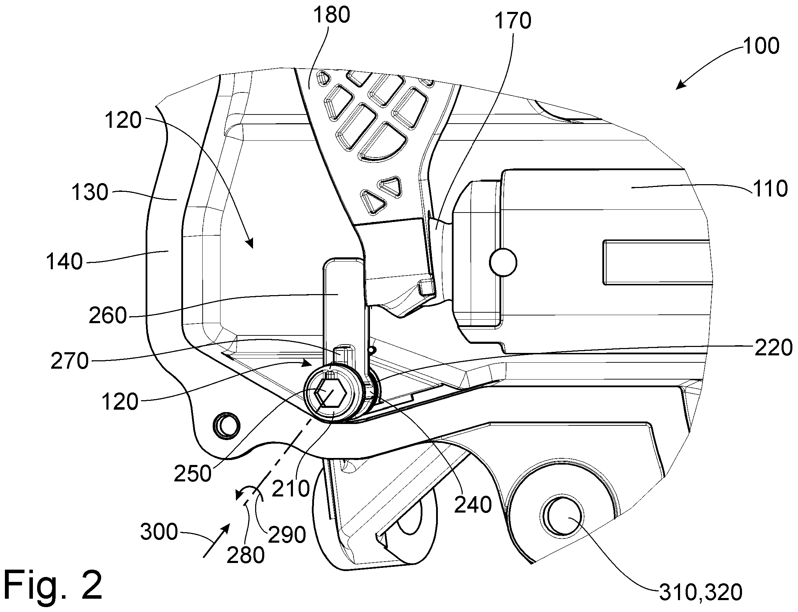

Fig. 2 zeigt eine Detailvergrößerung der Einrichtung 120 zum Verriegeln des Kraftübertragungselements 110. Das Verriegelungsbauteil 210 der Einrichtung 120 weist einen im Wesentlichen stiftförmigen Grundkörper 240 auf, der in einem Kopfbereich einen Innen-Sechskant 250 aufweist. Anstelle des Innen-Sechskants 250 kann bei anderen Ausführungsbeispielen auch eine andere Struktur vorgesehen werden, die ein Ausüben eines Drehmoments auf das Verriegelungsbauteil 210 ermöglicht. So kann hierüber gegebenenfalls eine Rücküberführung der Einrichtung 120 von der Freigabeposition in die Verriegelungsposition erreichbar sein, sodass eine Montage im Rahmen einer Wartung oder einer Reparatur gegebenenfalls vereinfacht werden kann.

Der Grundkörper 240 erstreckt sich hierbei im Wesentlichen entlang einer Erstreckungsrichtung, die mit einer Rotationsachse des Verriegelungsbauteils 210 zusammenfällt. Ein Anschlag 260 erstreckt sich im Wesentlichen senkrecht zu der Erstreckungsrichtung, wobei der Anschlag 260 bei der in Fig. 2 gezeigten Verriegelungsposition mit dem Kraftübertragungselement 110 mechanisch in Kontakt steht, um so die Bewegung des Kraftübertragungselements 110 entlang seiner Bewegungsrichtung zu beschränken. Bei dem in den Fig. 1 und 2 gezeigten Ausführungsbeispiel eines Kupplungsaktuators 100 steht hierbei der Anschlag 260 mittelbar über den Ausrückhebel 180 mit dem Kraftübertragungselement 110 in Kontakt. Selbstverständlich können jedoch bei anderen Ausführungsbeispielen eines Kupplungsaktuators 100 der Anschlag 260 auch unmittelbar mit dem Kraftübertragungselement 110 in Kontakt stehen.

Das Verriegelungsbauteil 210 weist ferner einen weiteren Anschlag 270 auf, der mit einem Gegenanschlag der Einrichtung 120 in der Verriegelungsposition derart in Anlage gebracht werden kann, dass die Bewegung des Kraftübertragungselements 110 entlang der Bewegungsrichtung hierdurch über eine durch die Anlage des weiteren Anschlags 270 an dem Gegenanschlag 390 festgelegte Position unterbunden wird. Der Gegenanschlag ist bei dem hier gezeigten Ausführungsbeispiel eines Kupplungsaktuators 100 an dem Gehäusedeckel 150 implementiert, der in Fig. 2 nicht erkennbar ist. Bei anderen Ausführungsbeispielen eines Kupplungsaktuators 100 kann hierfür selbstverständlich ebenso der Anschlag 260 verwendet werden, sodass gegebenenfalls eine separate Implementierung eines weiteren Anschlags 270 entfallen kann.

Bei dem hier gezeigten Verriegelungsbauteil 210 der Einrichtung 120 erstreckt sich der weitere Anschlag 270 in die gleiche Richtung wie auch der Anschlag 260. Beide erstrecken sich im Wesentlichen senkrecht zu der Erstreckungsrichtung des Grundkörpers 240 des Verriegelungsbauteils 210.

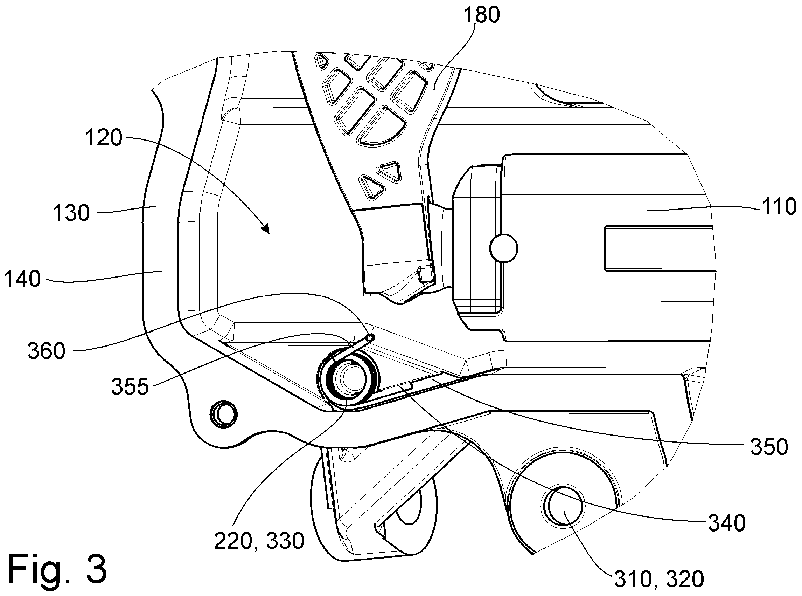

Wie bereits zuvor kurz erwähnt wurde, zeigt Fig. 2 die Einrichtung 120 in der Verriegelungsposition. Hierbei kann die Einrichtung 120 in die Freigabeposition wechseln, indem das Verriegelungsbauteil 210 um die auch der Erstreckungsrichtung des Grundkörpers 240 entsprechenden Drehachse 280 entlang der in Fig. 2 auch eingezeichneten Drehrichtung 290 gedreht wird. Wie im Zusammenhang mit den Fig. 3 bis 7 noch später ausgeführt werden wird, kann hierbei ein Benutzer, beispielsweise ein Monteur des Kupplungsaktuators 100 die Überführung der Einrichtung 120 von der Verriegelungsposition in die Freigabeposition durch ein Drücken des Verriegelungsbauteils 210 entlang der Erstreckungsrichtung des Grundkörpers 240, also entlang einer Betätigungsrichtung 300 bewirken, die auch als Freigaberichtung bezeichnet wird.

Die Drehrichtung 290 bzw. ihre Gegenrichtung entspricht daher einem ersten Bewegungsfreiheitsgrad, dem das Verriegelungsbauteil 210 beim Übergang von der Verriegelungsposition in die Freigabeposition folgt, um die Bewegung des Kraftübertragungselements 110 freizugeben. Der Benutzer kann diese Überführung zwischen den beiden Positionen durch ein Bewegen des Verriegelungsbauteils 210 entlang eines zweiten Bewegungsfreiheitsgrads, nämlich im vorliegenden Fall durch eine Bewegung des Verriegelungsbauteils 210 entlang der Betätigungsrichtung 300, auslösen oder bewirken.

Hierbei stehen bei dem hier gezeigten Ausführungsbeispiel die beiden Bewegungsfreiheitsgrade, also die Drehrichtung 290 und die Betätigungsrichtung 300, lokal stets senkrecht aufeinander. Ebenso ist es bei dem hier gezeigten Ausführungsbeispiel nicht nötig, dass der Benutzer das Verriegelungsbauteil 210 wenigstens teilweise entlang des ersten Freiheitsbewegungsgrads, also entlang der Drehrichtung 290, bewegen, um den Übergang zwischen den beiden Positionen zu bewirken. Durch beide Maßnahmen kann so eine Bedienung des Verriegelungsbauteils 210 vereinfacht werden, da Kräfte, die entlang der Drehrichtung 290 wirken, durch die beschriebenen Anordnungen von der Betätigungsrichtung 300 im Wesentlichen ferngehalten werden. Lediglich aufgrund von Reibungskräften und ähnlichen Kräften und Effekten kann eine entsprechende Beeinflussung der beiden Bewegungsfreiheitsgrade 290, 300 untereinander erfolgen.

Selbstverständlich können bei anderen Kupplungsaktuatoren 100 gemäß einem Ausführungsbeispiel auch andere Ausrichtungen der Bewegungsfreiheitsgrade zueinander bzw. auch eine Bewegung nicht ausschließlich entlang des zweiten Bewegungsfreiheitsgrads, also der Betätigungsrichtung 300, durch den Benutzer zu einer Entriegelung der Einrichtung 120 beitragen.

Wie im Zusammenhang mit Fig. 1 bereits zuvor erwähnt wurde, kann es einen Kupplungsaktuator 100 gemäß einem Ausführungsbeispiel ermöglichen, eine Befestigung des Gehäuses 130 an einer anderen Komponente, also beispielsweise einem Getriebegehäuse dadurch zu ermöglichen, dass eine Implementierung von Langlöchern entfallen kann. So kann ein Kupplungsaktuator 100 gemäß einem Ausführungsbeispiel es ermöglichen, dass dieser in einer eindeutigen Montageposition an der entsprechenden Gegenkomponente befestigbar ist. So kann bei einem Kupplungsaktuator das Gehäuse 130 entsprechende Verbindungsstrukturen 310 aufweisen, die gerade so ausgebildet sind, dass diese eine eindeutige Montageposition des Kupplungsaktuators bezogen auf die andere Komponente festlegen. Bei dem hier gezeigten Ausführungsbeispiel eines Kupplungsaktuators 100 handelt es sich bei den entsprechenden Verbindungsstrukturen um Löcher 320 mit einem kreisrunden Querschnitt. Selbstverständlich können auch andere Verbindungstechniken und Verbindungsstrukturen 310 zum Einsatz gebracht werden, die eine Montage in einer eindeutigen Montageposition ermöglichen. So können beispielsweise an dem Gehäuse 130 auch Stifte, Gewindestifte, Sacklöcher, Gewindesacklöcher oder andere, entsprechende Verbindungsstrukturen 310 vorgesehen werden.

Fig. 3 zeigt eine Fig. 2 ähnliche Darstellung, bei der jedoch das Verriegelungsbauteil 210 nicht gezeigt ist. So ermöglicht Fig. 3 einen genaueren Einblick in die Ausführung und Interaktion des Federelements 220, das auch als Vorspannfeder bezeichnet wird, mit dem Gehäuse 130 und dem Verriegelungsbauteil 210.

Das Federelement 220 ist hierbei derart ausgebildet und angeordnet, um eine solche Kraft zu bewirken, dass die Einrichtung 120 in der Freigabeposition verharrt, wenn die Einrichtung in diese überführt ist. So ist das Federelement 220 im vorliegenden Fall als Schenkelfeder 330 implementiert, die einen ersten Schenkel 340 aufweist, der in einer formschlüssigen Verbindung mit einer Nut 350 in der Gehäuseschale 140 steht und so ein Gegenlager für das Federelement 220 im Gehäuse 130 bildet. Das Federelement 220 weist ferner einen zweiten Schenkel 350 auf, der über einen weiteren, sich an den zweiten Schenkel 350 anschließenden abgewinkelten Abschnitt 360 an dem Anschlag 260 des Verriegelungsbauteils 210 abstützt bzw. mit diesem in Anlage steht, um so ein Gegenlager für das Federelement 220 an dem Verriegelungsbauteil 210 zu bilden.

Selbstverständlich können bei anderen Ausführungsbeispielen auch abweichende Federelemente 220 zum Einsatz kommen, sofern diese überhaupt notwendig sind. Die Verwendung der Schenkelfeder 330 als Federelement 220 bietet hier den Vorteil, dass hier ein Federelement 220 zum Einsatz kommt, welches sowohl bezüglich der Drehrichtung 290, wie auch bezüglich der Betätigungsrichtung 300 eine Federwirkung ausübt. Auch wenn eine Federwirkung entlang der Betätigungsrichtung 300 bei Weitem nicht für die Funktionsfähigkeit eines Ausführungsbeispiels notwendig ist, kann diese jedoch eine zusätzliche Sicherung bzw. eine zusätzliche Vereinfachung bei einer erneuten Montage des gleichen Kupplungsaktuators 100, beispielsweise im Rahmen einer Reparatur oder einer Wartung, ermöglichen. So kann der Kupplungsaktuator 100 beispielsweise derart ausgebildet sein, dass die Einrichtung 120 zum Verriegeln des Kraftübertragungselements 110 ferner so ausgebildet ist, um auch von der Freigabeposition wieder in die Verriegelungsposition überführbar zu sein. Bei einem solchen Ausführungsbeispiel handelt es sich folglich um eine Implementierung, bei der die Einrichtung 120 gerade nicht auf einer Zerstörung oder Unbrauchbarmachung einer entsprechenden Komponente beruht. Das hier gezeigte Ausführungsbeispiel ermöglicht vielmehr aufgrund auch der entlang der Betätigungsrichtung 300 wirkenden Kraft des Federelements 220 auch beim Rücküberführen von der Freigabeposition in die Verriegelungsposition eine Rückführung des Verriegelungsbauteils 210 entlang der Betätigungsrichtung 300.

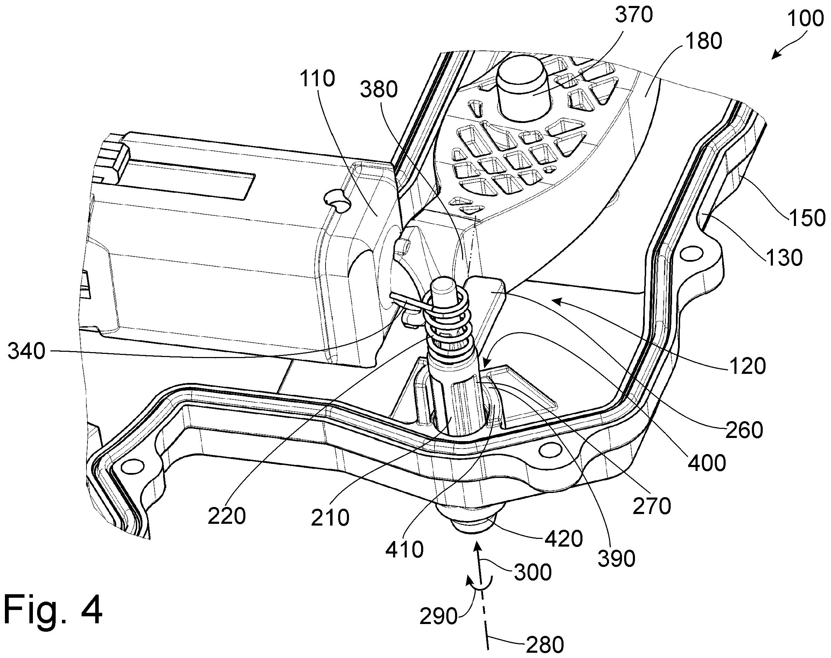

Fig. 4 zeigt eine perspektivische Darstellung des Kupplungsaktuators 100 gemäß einem Ausführungsbeispiel, bei dem abweichend von den Fig. 2 und 3 nunmehr der Gehäusedeckel 150 vonseiten des Kraftübertragungselements 110 dargestellt ist. So zeigt Fig. 4 beispielsweise die über einen Zapfen 370 drehbare Lagerung des Ausrückhebels 180, der mit dem Kraftübertragungselement 110 gekoppelt ist. Ebenso zeigt Fig. 4 noch einmal, dass der Anschlag 260 mit einer Anschlagfläche 380 des Ausrückhebels 180 in der in Fig. 4 ebenfalls gezeigten Verriegelungsposition in Kontakt bzw. in Anschlag steht. Die nicht gezeigte Vorlastfeder des Kraftübertragungselements 110 drückt hierbei die Anschlagfläche 380 des Ausrückhebels 180 gegen den Anschlag 260.

Fig. 4 zeigt darüber hinaus erneut den weiteren Anschlag 270, der im Rahmen eines Hinterschnitts an dem Verriegelungsbauteil 210 gebildet ist. Über den weiteren Anschlag 270 stützt sich das Verriegelungsbauteil 210 in dem verriegelten Zustand an dem auch als Deckel bezeichneten Gehäusedeckel 150 ab. Zu diesem Zweck umfasst der Gehäusedeckel 150 den bereits zuvor erwähnten Gegenanschlag 390, der im vorliegenden Ausführungsbeispiel einteilig an dem Gehäusedeckel 150 und seiner dem Kraftübertragungselement 110 zugewandten Oberfläche gebildet ist. Der Gegenanschlag 390 ist hierbei rampenförmig ausgebildet. Der Gegenanschlag 390 weist so eine Gegenanschlagfläche 400 auf, die dem weiteren Anschlag 270 zugewandt ist. Der weitere Anschlag 270 steht also mit dem Gegenanschlag 390 aufgrund der durch die Vorlastfeder des Kraftübertragungselements 110 und des Federelements 220 bewirkten Kräfte mit der Gegenanschlagfläche 400 in dem verriegelten Zustand in Anlage.

Sie weist darüber hinaus eine rampenförmige Fläche 410 auf, die an dem Gehäusedeckel 150 gebildet ist, und auf der das Verriegelungsbauteil 210 über den weiteren Anschlag 270 entlang gleitet, wenn die Einrichtung 120 von dem Verriegelungszustand in den Freigabezustand überführt wird.

Die Vorspannung des Federelements 220 sorgt hierbei dafür, dass der weitere Anschlag 270 an der rampenförmigen Fläche 410 während des Übergangs in den freigegebenen Zustand entlang gleitet, also die Einrichtung 120 entriegelt wird und in die geöffnete Position übergeht. In dieser Position wird das Verriegelungsbauteil 210 ebenfalls durch die Vorspannung des Federelements gehalten. Das Federelement ist also derart ausgebildet und angeordnet, dass dieses eine Kraft derart bewirkt, dass die Einrichtung 120 in der Freigabeposition verharrt, wenn diese in die Freigabeposition überführt wurde.

Darüber hinaus zeigt Fig. 4 ebenso die auch als Betätigungsrichtung bezeichnete Betätigungsrichtung 300 sowie die Drehrichtung 290.

Das Verriegelungsbauteil 210, wie es in Fig. 4 dargestellt ist, weist ferner eine Markierung 420 auf, die im vorliegenden Fall als ein farblich abgesetzter Ring ausgeführt ist. Dieser ist in der Verriegelungsposition, wie sie in Fig. 4 gezeigt ist, von außerhalb des Gehäuses 130 von dem Benutzer des Kupplungsaktuators sichtbar, während diese durch ein Drücken des Verriegelungsbauteils 210 entlang der Betätigungsrichtung 300 von dem Gehäuse 130 verdeckt wird. Selbstverständlich handelt es sich hierbei um ein optionales Detail, welches es dem Benutzer des Kupplungsaktuators 100 jedoch vereinfachen kann, die beiden Positionen der Einrichtung 120 zu unterscheiden. So kann die Einrichtung 120 und/oder das Verriegelungsbauteil 120 optional also eine Markierung aufweisen, die derart ausgebildet ist, dass ein Benutzer des Kupplungsaktuators von außerhalb des Gehäuses 130 erkennen kann, ob die Einrichtung 120 in der Verriegelungs- oder der Freigabeposition ist.

Unabhängig von der Implementierung der Markierung 420 kann die Position (Verriegelungs- oder Freigabeposition) der Einrichtung 120 von außen an dem Kupplungsaktuator 100 dadurch unterscheidbar sein, dass das Verriegelungsbauteil 210 von außerhalb des Gehäuses 130 erkennbar ist.

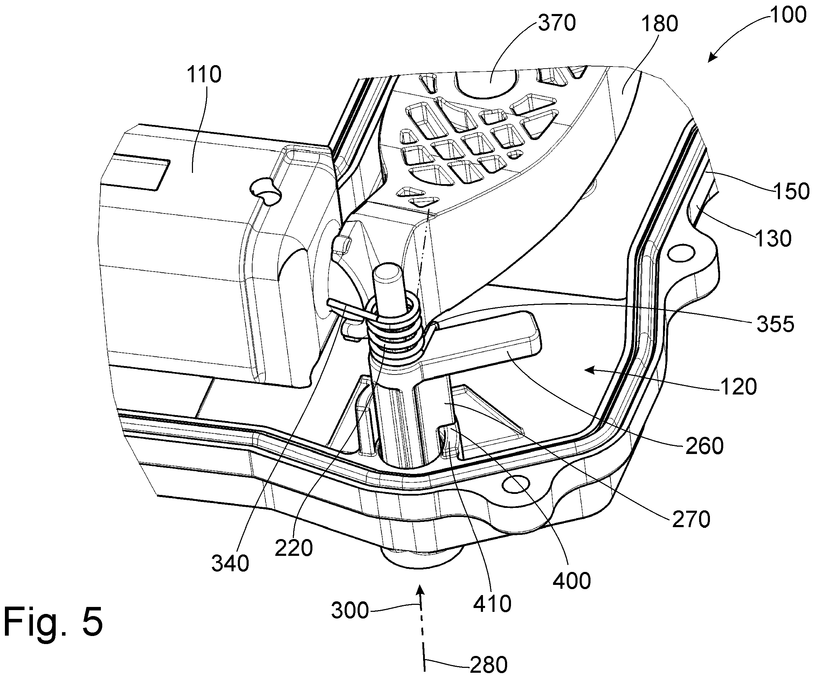

Fig. 5 zeigt eine perspektivische Darstellung des Kupplungsaktuators 100 in der Freigabeposition, nachdem also das Verriegelungsbauteil 210 durch Drücken entlang der Betätigungsrichtung 300 in ein Inneres des Gehäuses 130 geschoben wurde. Aufgrund der Vorspannung des Federelements 220 ist so das Verriegelungsbauteil 210 um die Drehachse 280 herum geschwenkt, sodass der Anschlag 260 nunmehr nicht mehr mit dem Kraftübertragungselement 110, vermittelt über den Ausrückhebel 180, in Kontakt bzw. in Anlage steht. Durch das Verschieben des Verriegelungsbauteils 210 entlang der Betätigungsrichtung 300, also entlang der parallel verlaufenden Drehachse 280, wurde der Formschluss, der zwischen dem weiteren Anschlag 270 und dem Gegenanschlag 390 in der Verriegelungsposition aus Fig. 4 bestand, aufgehoben und der weitere Anschlag 270 kann an der rampenförmigen Fläche 410 des Gegenanschlags 390 in seine Endposition gleiten. Die Einrichtung 120 ist so in die Freigabeposition übergegangen, in der sie die Bewegung des Kraftübertragungselements 110 entlang seiner Bewegungsrichtung nicht mehr behindert, diese also freigibt.

Darüber hinaus illustriert Fig. 5, dass das Federelement 220 aufgrund des Einschiebens des Verriegelungsbauteils 210 in eine komprimierte Form übergegangen ist, in der dieses eine entgegen der Betätigungsrichtung 300 gerichtete Kraft auf das Verriegelungsbauteil 210 ausübt.

Wird nun, beispielsweise im Rahmen einer Demontage des Kupplungsaktuators dieser geöffnet, kann durch ein Zurückdrehen des Verriegelungsbauteils dieses wiederum in die in Fig. 4 gezeigte Verriegelungsposition überführt werden. Je nach konkreter Implementierung eines Kupplungsaktuators 100 kann es hierbei notwendig, zumindest jedoch ratsam sein, das Gehäuse 130 zu öffnen.

Dies ist jedoch bei dem in Fig. 4 und 5 gezeigten Kupplungsaktuator 100 nicht notwendigerweise der Fall. So kann aufgrund des in Fig. 1 gezeigten Innen-Sechskants 250 ein Drehmoment auf das Verriegelungsbauteil 210 von außerhalb des Gehäuses 130 ausgeübt werden, welches ein Zurückdrehen des Verriegelungsbauteils gegen die in Fig. 4 gezeigte Drehrichtung 290 ermöglicht. Hierbei gleitet der weitere Anschlag diesmal in entgegengesetzter Richtung an der rampenförmigen Fläche 410 vorbei, bis dieser schließlich aufgrund der Vorspannung des Federelements bezogen auf die Betätigungsrichtung 300 wieder in die in Fig. 5 gezeigte Freigabeposition bewegt wird. Je nach konkretem Vorgehen bei einem solchen wieder verriegeln des Kupplungsaktuators 100 bzw. seiner Einrichtung 120 kann es darüber hinaus notwendig werden, über den Innen-Sechskant 250 ebenso ein ausreichendes Drehmoment aufzubringen, welches gegen die in Fig. 4 und 5 nicht gezeigte Vorlastfeder des Kraftübertragungselements 110 wirkt, sodass dieses in die in Fig. 4 gezeigte Position zurückbewegt wird.

Selbstverständlich können bei anderen Ausführungsbeispielen anstelle des Innen-Sechskants 250, wie er in Fig. 1 gezeigt ist, auch andere drehmomentübertragungsfähige Strukturen implementiert werden, die im Zusammenspiel mit einem Federelement, welches auch entlang des zweiten Bewegungsfreiheitsgrads eine Kraft auf das Verriegelungsbauteil 210 ausübt, kann so ohne ein Öffnen des Gehäuses 130 das Verriegelungsbauteil 210 zurück in die Verriegelungsposition, wie sie in Fig. 4 gezeigt ist, gebracht werden. Anders ausgedrückt kann hierdurch die Einrichtung 120 von der Freigabeposition in die Verriegelungsposition zurück überführt werden, wobei dies optional auch von außerhalb des Gehäuses 130 aus erfolgen kann.

Selbstverständlich können bei anderen Ausführungsbeispielen die Einrichtung 120 bzw. der Kupplungsaktuator 100 auch derart ausgeführt sein, dass dieser - sofern überhaupt möglich - nur durch ein Öffnen des Gehäuses 130 in die Verriegelungsposition zurück überführbar ist. In einem solchen Fall kann es beispielsweise nötig oder ratsam sein, den Anschlag 260 durch den Einsatz eines entsprechenden Werkzeugs im Inneren in die Blockade bzw. Verriegelungsposition zurückzuführen.

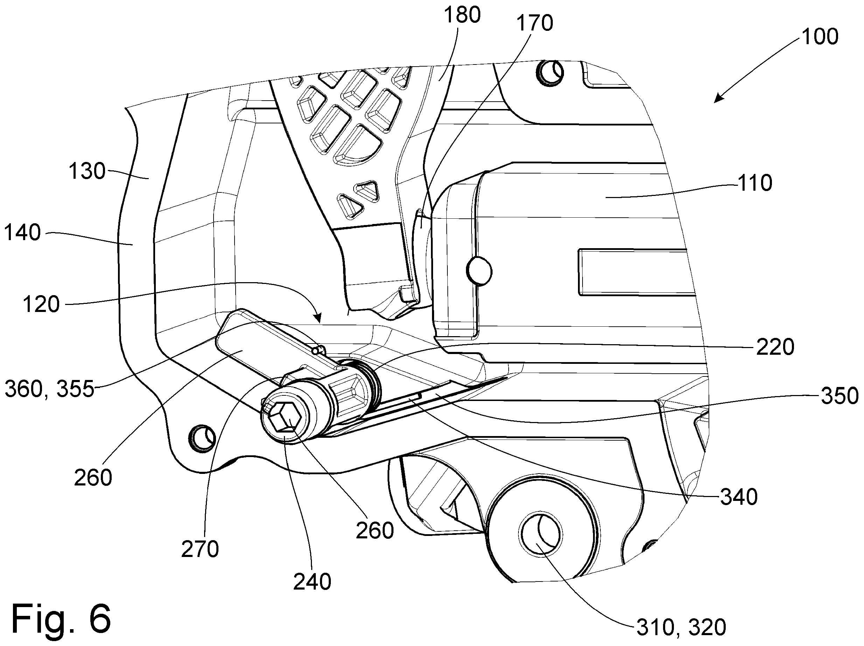

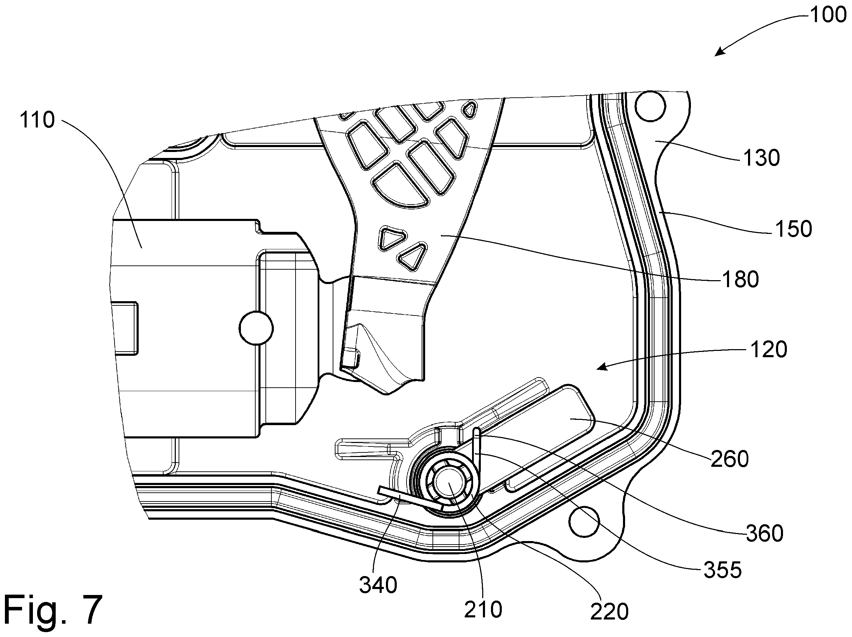

Lediglich der Vollständigkeit halber zeigen die Fig. 6 und 7 entsprechende Detailvergrößerungen des Kupplungsaktuators 100 und seiner Einrichtung 120 in der Freigabeposition, in der also die Bewegung des Kraftübertragungselements 110 entlang seiner Bewegungsrichtung nicht von dem Verriegelungsbauteil 210 beschränkt wird. Fig. 6 zeigt hierbei eine Fig. 2 vergleichbare Darstellung mit Blick auf die Gehäuseschale 140, während Fig. 7 eine Aufsicht auf den Gehäusedeckel 150 zeigt.

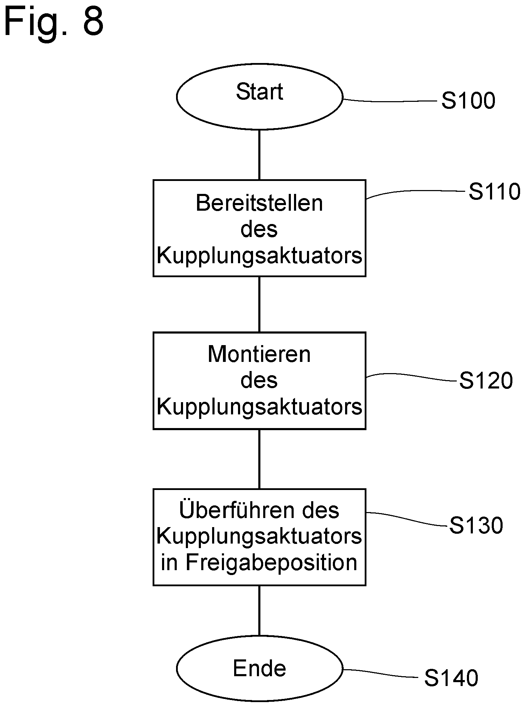

Fig. 8 zeigt ein Flussdiagramm eines Ausführungsbeispiels eines Verfahrens zum Einbauen eines Kupplungsaktuators 100 gemäß einem Ausführungsbeispiel. Nach einem Start des Verfahrens in Schritt S100 wird zunächst der Kupplungsaktuator in einem Schritt S110 derart bereitgestellt, dass die Einrichtung 120 zum Verriegeln des Kraftübertragungselements 110 in der Verriegelungsposition ist und die Bewegung des Kraftübertragungselements 110 durch die Einrichtung 120 beschränkt ist. Anschließend wird in einem Schritt S120 der Kupplungsaktuator 100 an einem entsprechenden Gegenbauteil oder einer entsprechenden Gegenkomponente montiert. Hierbei kann es sich beispielsweise um das Getriebegehäuse eines entsprechenden Getriebes handeln, wobei das Getriebegehäuse die entsprechende Kupplung für den Kupplungsaktuator ebenfalls umfasst. Anschließend wird in einem Schritt S130 der Kupplungsaktuator in die Freigabeposition überführt, bevor das Verfahren in einem Schritt S140 endet.

So kann also beispielsweise nach der Befestigung des Kupplungsaktuators 100 an dem Getriebegehäuse und der Befestigung des Stößels 160 an den Ausrückhebel 180 bzw. eine entsprechende Ausrückgabel das Verriegelungsbauteil 210 mit dem Finger oder einem geeigneten Werkzeug gedrückt werden, um den Kupplungsaktuator 100 bzw. seine Einrichtung 120 aus der Verriegelungsposition in die Freigabeposition zu versetzen. Hierbei wird das Verriegelungsbauteil 210 dann durch das Federelement 220, also im Fall des gezeigten Ausführungsbeispiels durch die Schenkelfeder 330, durch seine Vorspannung aus der auch als Arretierposition bezeichneten Verriegelungsposition gezogen. Hierdurch gibt die Einrichtung 120 den verschleißausgleichenden Stößel 160 frei. Somit kann die nötige Vorlast an einem Ausrücker einer entsprechenden Kupplung eingestellt werden.

Wie bereits zuvor erläutert wurde, kann darüber hinaus der Kupplungsaktuator 100 auch im Rahmen einer Montage oder einer Wartung gegebenenfalls wieder verwendet werden. Sollte so der Kupplungsaktuator 100 im Fahrzeug beispielsweise demontiert werden, kann der Vorspannmechanismus, also die Einrichtung 120, wieder durch einen Mechaniker auf die beschriebene Art und Weise aktiviert werden. Im Falle einer erneuten Montage an das Fahrzeug kann dann der Mechanismus, also die Einrichtung 120, in der beschriebenen Art und Weise erneut freigegeben werden. Bei dem hier gezeigten Ausführungsbeispiel stellt so die Schenkelfeder 330, bzw. das Federelement 220, aufgrund ihrer Vorspannung eine Komponente dar, die die Montage erleichtert. Durch ihre Vorspannung während des Drückens des Verriegelungsbauteils 210 kann die gesperrte Position freigegeben werden.

Hierdurch kann eine schnellere und gegebenenfalls sicherere Montage eines Kupplungsaktuators 100 gemäß einem Ausführungsbeispiel an einem Getriebegehäuse oder einer anderen entsprechenden Komponente ermöglicht werden. So sind gegebenenfalls Einstellarbeiten hinsichtlich der Vorlast über Langlöcher oder andere entsprechende Strukturen am Gehäuse nicht mehr notwendig.

Ein Ausführungsbeispiel eines Kupplungsaktuators 100 kann so ein stärker automatisiertes Verfahren zur Einstellung der Vorlast an einem Ausrücker durch den Einsatz eines entsprechenden Kupplungsaktuators 100 gemäß einem Ausführungsbeispiel ermöglichen.

Ein Kupplungsaktuator (100) gemäß einem Ausführungsbeispiel kann so gegebenenfalls eine Montage eines Kupplungsaktuators (100) vereinfachen.

Die in der vorstehenden Beschreibung, den Ansprüchen und den Zeichnungen offenbarten Merkmale können sowohl einzeln, wie auch in beliebiger Kombination für die Verwirklichung eines Ausführungsbeispiels in ihren verschiedenen Ausgestaltungen von Bedeutung und implementiert sein.

### Bezugszeichen

- 100: Kupplungsaktuator
- 110: Kraftübertragungselement
- 120: Einrichtung
- 130: Gehäuse
- 140: Gehäuseschale
- 150: Gehäusedeckel
- 160: Stößel
- 170: Kugelgelenk
- 180: Ausrückhebel
- 190: weiteres Bauteil
- 200: Dichtung
- 210: Verriegelungsbauteil
- 220: Federelement
- 230: Öffnung
- 240: Grundkörper
- 250: Innen-Sechskant
- 260: Anschlag
- 270: weiterer Anschlag
- 280: Drehachse
- 290: Drehrichtung
- 300: Betätigungsrichtung
- 310: Verbindungsstruktur
- 320: Loch
- 330: Schenkelfeder
- 340: erster Schenkel
- 350: Nut
- 355: zweiter Schenkel
- 360: abgewinkelter Abschnitt
- 370: Zapfen
- 380: Anschlagfläche
- 390: Gegenanschlag
- 400: Gegenanschlagfläche
- 410: rampenförmige Fläche
- 420: Markierung

- S100: Start
- S110: Bereitstellen des Kupplungsaktuators
- S120: Montieren des Kupplungsaktuators
- S130: Überführen des Kupplungsaktuators in die Freigabeposition
- S140: Ende

## Patentansprüche

1. Verfahren zum Einbauen eines Kupplungsaktuators (100) für eine Kupplung, beispielsweise eine Kupplung für ein Fahrzeug, mit folgenden Merkmalen:
einem Kraftübertragungselement (110), das ausgebildet ist, um durch eine Bewegung entlang einer Bewegungsrichtung eine Kraft auf ein Betätigungselement der Kupplung auszuüben, um ein wenigstens teilweises Schließen oder Öffnen der Kupplung zu bewirken;
eine Einrichtung (120) zum Verriegeln des Kraftübertragungselements (110), die ausgebildet ist, um von einer Verriegelungsposition in eine Freigabeposition überführbar zu sein, wobei die Einrichtung (120) derart ausgebildet ist, dass sie in der Verriegelungsposition eine Bewegung des Kraftübertragungselements entlang der Bewegungsrichtung beschränkt und in der Freigabeposition die Bewegung des Kraftübertragungselements entlang der Bewegungsrichtung freigibt,
umfassend die Schritte:
Bereitstellen (S110) des Kupplungsaktuators (100) derart, dass die Einrichtung (120) zum Verriegeln des Kraftübertragungselements (110) in der Verriegelungsposition ist und die Bewegung des Kraftübertragungselements (110) durch die Einrichtung (120) beschränkt wird;
Montieren (S120) des Kupplungsaktuators (100); und
Überführen (S130) des Kupplungsaktuators (100) in die Freigabeposition.

2. Verfahren nach Anspruch 1, bei dem die Einrichtung (120) zum Verriegeln des Kraftübertragungselements (110) derart ausgebildet ist, dass die Einrichtung (120) in einem montierten Zustand von außerhalb eines Gehäuses (130) des Kupplungsaktuators (100) von der Verriegelungsposition in die Freigabeposition überführbar ist.

3. Verfahren nach einem der vorhergehenden Ansprüche, bei dem die Einrichtung (120) zum Verriegeln des Kraftübertragungselements (110) ferner ausgebildet ist, um von der Freigabeposition in die Verriegelungsposition überführbar zu sein.

4. Verfahren nach einem der vorhergehenden Ansprüche, bei dem die Einrichtung (120) zum Verriegeln des Kraftübertragungselements (110) ein Federelement (220) umfasst, das derart ausgebildet und angeordnet ist, um eine Kraft derart zu bewirken, dass die Einrichtung (120) in der Freigabeposition verharrt, wenn die Einrichtung in diese überführt ist.

5. Verfahren nach einem der vorhergehenden Ansprüche, bei dem die Einrichtung (120) zum Verriegeln des Kraftübertragungselements (110) ein Verriegelungsbauteil (210) umfasst, das ausgebildet ist, um durch eine Bewegung entlang eines ersten Bewegungsfreiheitsgrads (290) die Bewegung des Kraftübertragungselements (110) freizugeben, wobei die Einrichtung (120) ferner derart ausgebildet ist, sodass ein Benutzer die Überführung der Einrichtung von der Verriegelungsposition in die Freigabeposition durch ein Bewegen des Verriegelungsbauteils (210) entlang eines von dem ersten Bewegungsfreiheitsgrad (290) verschiedenen zweiten Bewegungsfreiheitsgrad (300) bewirken kann.

6. Verfahren nach Anspruch 5, bei dem das Verriegelungsbauteil (210) derart ausgebildet ist, dass der Benutzer das Überführen von der Verriegelungsposition in die Freigabeposition durch ein Bewegen des Verriegelungsbauteils (210) ausschließlich entlang des zweiten Bewegungsfreiheitsgrads (300) bewirken kann und/oder bei dem die Einrichtung (120) derart ausgebildet ist, dass der erste (290) und der zweite Bewegungsfreiheitsgrad (300) im Wesentlichen lokal stets senkrecht aufeinander stehen.

7. Verfahren nach einem der vorhergehenden Ansprüche, bei dem die Einrichtung (120) zum Verriegeln des Kraftübertragungselements (110) ein Verriegelungsbauteil (210) umfasst, das einen Anschlag (260) aufweist, der derart ausgebildet und angeordnet ist, dass dieser in der Verriegelungsposition mit dem Kraftübertragungselement (110) mechanisch mittelbar oder unmittelbar in Kontakt steht, um die Bewegung des Kraftübertragungselements (110) entlang der Bewegungsrichtung zu beschränken.

8. Verfahren nach Anspruch 7, bei dem der Anschlag (260) mit einem Gegenanschlag (390) der Einrichtung (120) in der Verriegelungsposition derart in Anlage steht, dass die Bewegung des Kraftübertragungselement (110) entlang der Bewegungsrichtung hierdurch über eine durch die Anlage des Anschlags (260) an dem Gegenanschlag (390) unterbunden wird,
oder
bei dem das Verriegelungsbauteil (210) einen weiteren Anschlag (270) aufweist, der mit dem Gegenanschlag (390) der Einrichtung in der Verriegelungsposition derart in Anlage steht, dass die Bewegung des Kraftübertragungselement (110) entlang der Bewegungsrichtung hierdurch über eine durch die Anlage des weiteren Anschlags (270) an dem Gegenanschlag (390) unterbunden wird.

9. Verfahren nach einem der vorhergehenden Ansprüchen, bei dem ein Gehäuse (130) des Kupplungsaktuators (100) Verbindungsstrukturen (310) aufweist, die derart ausgebildet sind, sodass diese eine eindeutige Montageposition festlegen.

## Claims

1. Method for installing a clutch actuator (100) for a clutch, for example a clutch for a vehicle, having the following features:
a force transmission element (110) which is configured to exert a force onto an actuating element of the clutch as a result of a movement along a movement direction, in order to bring about at least partial closing or opening of the clutch;
a device (120) for locking the force transmission element (110), which device (120) is configured such that it can be transferred from a locked position into a released position, the device (120) being configured in such a way that, in the locked position, it limits a movement of the force transmission element along the movement direction and, in the released position, releases the movement of the force transmission element along the movement direction,
comprising the steps:
providing (S110) of the clutch actuator (100) in such a way that the device (120) for locking the force transmission element (110) is in the locked position and the movement of the force transmission element (110) is limited by way of the device (120);
mounting (S120) of the clutch actuator (100); and
transferring (S130) of the clutch actuator (100) into the released position.

2. Method according to Claim 1, in the case of which the device (120) for locking the force transmission element (110) is configured in such a way that, in a mounted state, the device (120) can be transferred from the locked position into the released position from outside a housing (130) of the clutch actuator (100).

3. Method according to either of the preceding claims, in the case of which the device (120) for locking the force transmission element (110) is configured, furthermore, such that it can be transferred from the released position into the locked position.

4. Method according to one of the preceding claims, in the case of which the device (120) for locking the force transmission element (110) comprises a spring element (220) which is configured and arranged so as to bring about a force in such a way that the device (120) remains in the released position when the device is transferred into the said released position.

5. Method according to one of the preceding claims, in the case of which the device (120) for locking the force transmission element (110) comprises a locking component (210) which is configured to release the movement of the force transmission element (110) as a result of a movement along a first degree of movement freedom (290), the device (120) being configured, furthermore, such that a user can bring about the transfer of the device from the locked position into the released position as a result of a movement of the locking component (210) along a second degree of movement freedom (300) which is different from the first degree of movement freedom (290).

6. Method according to Claim 5, in the case of which the locking component (210) is configured in such a way that the user can bring about the transfer from the locked position into the released position as a result of a movement of the locking component (210) exclusively along the second degree of movement freedom (300), and/or in the case of which the device (120) is configured in such a way that the first (290) and the second degree of movement freedom (300) always lie substantially locally perpendicularly with respect to one another.

7. Method according to one of the preceding claims, in the case of which the device (120) for locking the force transmission element (110) comprises a locking component (210) which has a stop (260) which is configured and arranged in such a way that, in the locked position, it is mechanically in contact indirectly or directly with the force transmission element (110), in order to limit the movement of the force transmission element (110) along the movement direction.

8. Method according to Claim 7, in the case of which the stop (260) is in contact with a counterstop (390) of the device (120) in the locked position in such a way that the movement of the force transmission element (110) along the movement direction is prevented as a result via a as a result of the contact of the stop (260) with the counterstop (390), or in the case of which the locking component (210) has a further stop (270) which is in contact with the counterstop (390) of the device in the locked position in such a way that the movement of the force transmission element (110) along the movement direction is prevented as a result via a as a result of the contact of the further stop (270) with the counterstop (390).

9. Method according to one of the preceding claims, in the case of which a housing (130) of the clutch actuator (100) has connecting structures (310) which are configured in such a way that they fix a clear mounting position.

## Revendications

1. Procédé de montage d'un actionneur d'embrayage (100) pour un embrayage, par exemple un embrayage pour un véhicule, présentant les caractéristiques suivantes:
- un élément de transmission de force (110), qui est configuré pour exercer, par un mouvement le long d'une direction de mouvement, une force sur un élément d'actionnement de l'embrayage, afin de provoquer au moins partiellement la fermeture ou l'ouverture de l'embrayage;
- un dispositif (120) pour verrouiller l'élément de transmission de force (110), qui est configuré de façon à pouvoir être transféré d'une position de verrouillage à une position de libération, dans lequel le dispositif (120) est configuré de telle manière que dans la position de verrouillage il limite un mouvement de l'élément de transmission de force le long de la direction de mouvement et que dans la position de libération il libère le mouvement de l'élément de transmission de force le long de la direction de mouvement,
comprenant les étapes suivantes:
- préparer (S110) l'actionneur d'embrayage (100) de telle manière que le dispositif (120) pour verrouiller l'élément de transmission de force (110) se trouve dans la position de verrouillage et que le mouvement de l'élément de transmission de force (110) soit limité par le dispositif (120);
- monter (S120) l'actionneur d'embrayage (100); et
- transférer (S130) l'actionneur d'embrayage (110) dans la position de libération.

2. Procédé selon la revendication 1, dans lequel le dispositif (120) pour verrouiller l'élément de transmission de force (110) est configuré de telle manière que le dispositif (120) puisse, dans un état monté, être transféré de la position de verrouillage à la position de libération depuis l'extérieur d'un boîtier (130) de l'actionneur d'embrayage (100).

3. Procédé selon l'une quelconque des revendications précédentes, dans lequel le dispositif (120) pour verrouiller l'élément de transmission de force (110) est en outre configuré de façon à pouvoir être transféré de la position de libération à la position de verrouillage.

4. Procédé selon l'une quelconque des revendications précédentes, dans lequel le dispositif (120) pour verrouiller l'élément de transmission de force (110) comprend un élément de ressort (220), qui est configuré et disposé de façon à provoquer une force telle que le dispositif (120) se bloque dans la position de libération, lorsque le dispositif est transféré dans cette position.

5. Procédé selon l'une quelconque des revendications précédentes, dans lequel le dispositif (120) pour verrouiller l'élément de transmission de force (110) comprend un composant de verrouillage (210), qui est configuré pour libérer le mouvement de l'élément de transmission de force (110) par un mouvement le long d'un premier degré de liberté de mouvement (290), dans lequel le dispositif (120) est en outre configuré de telle façon qu'un utilisateur puisse provoquer le transfert du dispositif de la position de verrouillage à la position de libération par un mouvement du composant de verrouillage (210) le long d'un second degré de liberté de mouvement (300) différent du premier degré de liberté de mouvement (290).

6. Procédé selon la revendication 5, dans lequel le composant de verrouillage (210) est configuré de telle manière que l'utilisateur ne puisse provoquer le transfert de la position de verrouillage à la position de libération que par un mouvement du composant de verrouillage (210) exclusivement le long du second degré de liberté de mouvement (300) et/ou dans lequel le dispositif (120) est configuré de telle manière que le premier (290) et le second (300) degrés de liberté de mouvement soient essentiellement localement toujours perpendiculaires l'un à l'autre.

7. Procédé selon l'une quelconque des revendications précédentes, dans lequel le dispositif (120) pour verrouiller l'élément de transmission de force (110) comprend un composant de verrouillage (210), qui présente une butée (260), qui est configurée et disposée de telle manière que dans la position de verrouillage elle soit mécaniquement en contact indirectement ou directement avec l'élément de transmission de force (110), afin de limiter le mouvement de l'élément de transmission de force (110) le long de la direction de mouvement.

8. Procédé selon la revendication 7, dans lequel la butée (260) prend appui sur une contrebutée (390) du dispositif (120) dans la position de verrouillage, de telle manière que le mouvement de l'élément de transmission de force (110) le long de la direction de mouvement soit ainsi empêché au moyen d'un par l'appui de la butée (260) sur la contrebutée (390),
ou
dans lequel le composant de verrouillage (210) présente une autre butée (270), qui s'appuie dans la position de verrouillage sur la contrebutée (390) du dispositif, de telle manière que le mouvement de l'élément de transmission de force (110) le long de la direction de mouvement soit ainsi empêché au moyen d'un par l'appui de l'autre butée (270) sur la contrebutée (390).

9. Procédé selon l'une quelconque des revendications précédentes, dans lequel un boîtier (130) de l'actionneur d'embrayage (100) présente des structures d'assemblage (310), qui sont configurées de telle manière qu'elles définissent une position de montage unique.
